# EUROPEAN PATENT APPLICATION

(11) **EP 4 576 327 A1**
(43) Date of publication of application: **25.06.2025**
(21) Application number: 23219632.9
(22) Date of filing: 22.12.2023
(51) Int. Cl.: H01M 10/613, H01M 10/625, H01M 10/643, H01M 10/6554, H01M 10/6556, H01M 50/213, H01M 50/249, H01M 50/291

(54) **A BATTERY MODULE, A BATTERY PACK, AND A VEHICLE**

(71) Applicant: VOLVO TRUCK CORPORATION, 405 08 Göteborg (SE)
(72) Inventor: Jonsson, Kasper, 417 57 Göteborg (SE); Irannezhad, Mike, 411 20 Göteborg (SE); Rout, Dhirendra, 422 54 Göteborg (SE)
(74) Representative: Kransell & Wennborg KB

(57) **Abstract**

A battery module (1) for a battery pack (100) is disclosed, comprising:
- a first and a second longitudinal frame member (51, 52) extending in the longitudinal direction (L),
- at least three crossbeam frame members (61, 62, 63, 64) extending in the width direction (W),
- at least two separate cell stacks (2, 2'), wherein each cell stack (2, 2') comprises a set of cylindrical battery cells (3) and a holder (4, 4') in which the set of cylindrical battery cells (3) are received. The disclosure also relates to a battery pack (100) and a vehicle (200)

## Description

### TECHNICAL FIELD

The disclosure relates generally to energy storage systems. In particular aspects, the disclosure relates to a battery module, a battery pack, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack typically comprises a plurality of battery cells, i.e., electrochemical battery cells, which are electrically connected in series and/or in parallel. The battery pack may comprise one or more separate battery modules, wherein each module comprises a stack of battery cells. The battery cells may be cylindrical battery cells.

Due to the electrification trend, such as for vehicles, there is an ongoing strive to develop improved technology relating to battery packs and battery modules, such as to provide cost-effective configurations which are reliable, robust and/or space efficient.

### SUMMARY

According to a first aspect of the disclosure, a battery module for a battery pack is provided. The battery module has a longitudinal extension in a longitudinal direction, a width extension in a width direction and a height extension in a height direction. The battery module comprises:
- a first and a second longitudinal frame member extending in the longitudinal direction,
- at least three crossbeam frame members extending in the width direction,
- at least two separate cell stacks, wherein each cell stack comprises a set of cylindrical battery cells and a holder in which the set of cylindrical battery cells are received, wherein each cylindrical battery cell has a longitudinal extension along the height direction,

wherein the first and second longitudinal frame members and the at least three crossbeam frame members are connected such that they form at least two receiving spaces,
wherein each receiving space comprises a respective one of the at least two separate cell stacks,
wherein each cell stack is a separate unit which is arranged to be insertable and removable from the receiving space. The first aspect of the disclosure may seek to provide a space-efficient, reliable and robust battery module which is modular. A technical benefit may include that a scalable configuration is achieved in a cost-effective manner. The holder for each cell stack may also result in a modular configuration in which each cell stack can be easily inserted and removed from the battery module. This in turn may be beneficial if there e.g. is a need to replace a cell stack and/or to perform service on the cell stack.

Optionally in some examples, including in at least one preferred example, the holder of each cell stack comprises a bottom holder portion and a top holder portion, as seen in the height direction, which at least partly enclose the set of cylindrical battery cells. A technical benefit may include that the cylindrical battery cells may be easier to insert and remove from the holder.

Optionally in some examples, including in at least one preferred example, the holder of at least one of the at least two separate cell stacks, and for at least one respective cylindrical battery cell of the set of cylindrical battery cells, comprises a respective cell space enclosed by a material portion of the holder. A technical benefit may include that the cylindrical battery cell is more reliably retained in the holder.

Optionally in some examples, including in at least one preferred example, the cell space is cylindrically formed with a cell space center axis being substantially aligned with a center axis of the cylindrical battery cell. A technical benefit may include that the cylindrical battery cell is more reliably retained in the holder.

Optionally in some examples, including in at least one preferred example, the holder, in the cell space, comprises a bottom support flange, as seen in the height direction, wherein the cylindrical battery cell is supported by the bottom support flange. A technical benefit may include that the cylindrical battery cell is more reliably retained in the holder.

Optionally in some examples, including in at least one preferred example, the holder, in the cell space, has an opening facing downwardly, as seen in the height direction. A technical benefit may include that the cylindrical battery cell in the cell space is allowed to be cooled from below through the opening.

Optionally in some examples, including in at least one preferred example, the holder, in the cell space, comprises a top support flange, as seen in the height direction, wherein the cylindrical battery cell is retained by the top support flange. A technical benefit may include that the cylindrical battery cell is more reliably retained in the holder.

Optionally in some examples, including in at least one preferred example, the holder, in the cell space, has an opening facing upwardly, as seen in the height direction. A technical benefit may include that the cylindrical battery cell in the cell space is allowed to be electrically connected to an electric circuit from above.

Optionally in some examples, including in at least one preferred example, the battery module further comprises a cooling plate member provided below the at least two separate cell stacks, as seen in the height direction, wherein a bottom portion of each cylindrical battery cell is facing the cooling plate member. A technical benefit may include that improved cooling of the cylindrical battery cells is achieved in an efficient manner.

Optionally in some examples, including in at least one preferred example, the cooling plate member is attached to the at least three crossbeam frame members and/or to the first and second longitudinal frame members by one or more fasteners from below, as seen in the height direction. A technical benefit may include that a reliable and robust connection of the cooling plate member is achieved in a cost-effective manner.

Optionally in some examples, including in at least one preferred example, the cooling plate member, on a longitudinal edge thereof and/or on a transverse edge thereof, comprises one or more indentations adapted to provide a space for a fastener. A technical benefit may include a facilitated attachment of the holder(s) to the first and second longitudinal frame members and/or to the at least three crossbeam frame members.

Optionally in some examples, including in at least one preferred example, the battery module further comprises an auxiliary plate member for at least one of the at least two cell stacks, wherein the auxiliary plate member is provided between the holder and the cooling plate member. A technical benefit may include improved support of the at least one of the at least two cell stacks. For example, the auxiliary plate member may avoid or mitigate unwanted deflections.

Optionally in some examples, including in at least one preferred example, the auxiliary plate member is attached to the holder by one or more fasteners from below, as seen in the height direction. A technical benefit may include that a reliable and robust connection of the auxiliary plate member is achieved in a cost-effective manner.

Optionally in some examples, including in at least one preferred example, the set of cylindrical battery cells are resting on the auxiliary plate member. A technical benefit may include improved support for the cylindrical cell members.

Optionally in some examples, including in at least one preferred example, the holder of at least one of the at least two separate cell stacks is attached to at least one of the at least three crossbeam frame members and/or to the first and second longitudinal frame members by one or more fasteners from below, as seen in the height direction. A technical benefit may include that a reliable and robust connection of the holder is achieved in a cost-effective manner.

Optionally in some examples, including in at least one preferred example, at least one of the at least three crossbeam frame members and/or the first and second longitudinal frame members comprises one or more flanges, at a bottom portion thereof, into which the one or more fasteners are inserted. A technical benefit may include that a reliable and robust connection of the holder is achieved in a cost-effective manner.

Optionally in some examples, including in at least one preferred example, the at least three crossbeam frame members are identical. A technical benefit may include a cost-effective configuration in which fewer different parts may be used for building the battery module.

Optionally in some examples, including in at least one preferred example, the first and second longitudinal frame members are identical. A technical benefit may include a cost-effective configuration in which fewer different parts may be used for building the battery module.

According to a second aspect of the disclosure, a battery pack is provided. The battery pack comprises at least two battery modules according to any one of the examples of the first aspect of the disclosure. The second aspect of the disclosure may seek to provide a space-efficient, reliable and robust battery pack which is modular. A technical benefit may include that a scalable configuration is achieved in a cost-effective manner. The holder for each cell stack may also result in a modular configuration in which each cell stack can be easily inserted and removed from the respective battery module. This in turn may be beneficial if there e.g. is a need to replace a cell stack and/or to perform service on the cell stack.

According to a third aspect of the disclosure, a vehicle is provided. The vehicle comprises a battery module according to any one of the examples of the first aspect of the disclosure and/or a battery pack according to any one of the examples of the second aspect of the disclosure. Advantages and technical benefits of the third aspect of the disclosure are analogous to the advantages and technical benefits of the first and second aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary battery module in a perspective view according to an example.
**FIG. 3** is an exemplary portion of a battery module in an exploded view according to an example.
**FIG. 4** is an exemplary portion of a battery module in an exploded view according to an example.
**FIG. 5** is an exemplary battery module in a sectional view according to an example.
**FIG. 6** is an exemplary portion of a battery module in an exploded view according to an example.
**FIG. 7** is an exemplary portion of a battery module in an exploded view according to an example.
**FIG. 8** is an exemplary battery module in a perspective view according to an example.
**FIG. 9** is an exemplary battery pack in a schematic side view according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide a space-efficient, reliable and robust battery module which is easily scalable. An aim of the present disclosure is also to provide a scalable configuration which is cost-effective. Additionally, an aim of the present disclosure is to is to provide an improved battery module, battery pack, and/or vehicle, which at least partly alleviates one or more drawbacks of the prior art, or which at least is a suitable alternative.

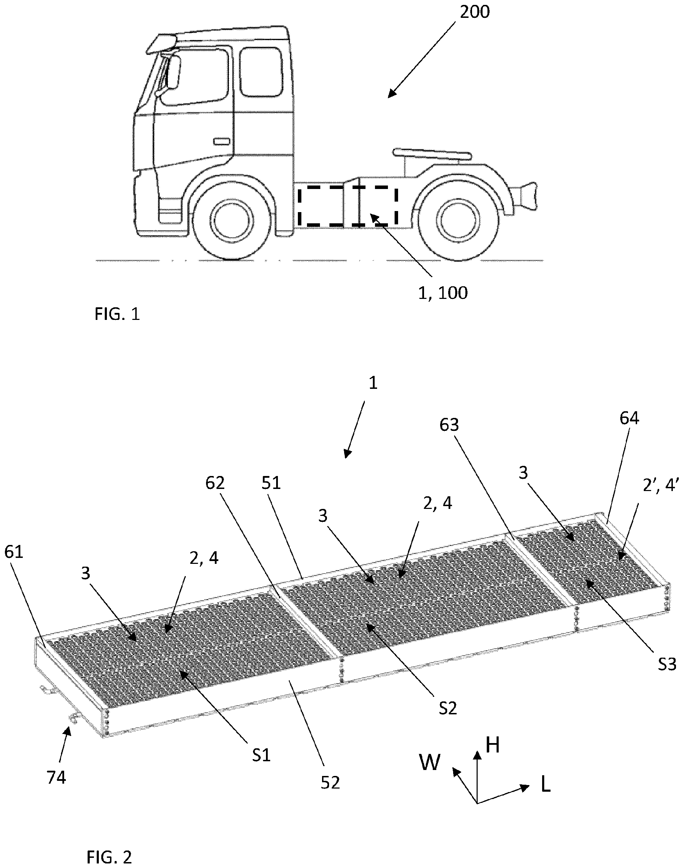

**FIG. 1** is an exemplary vehicle 200 in a side view according to an example. The vehicle 200 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 200 comprises a battery module 1 and a battery pack 100 according to an example disclosed herein. The battery pack 100 may at least partly be used for driving one or more electric motors (not shown) of the vehicle 200. The vehicle 200 may accordingly be an electric vehicle or a hybrid vehicle, i.e., a vehicle which at least partly uses electric power for propulsion. The battery module 1 and the battery pack 100 as disclosed herein may also be used in a stationary unit, such as a building and/or any stationary machinery.

**FIG. 2** is an exemplary battery module 1 in a perspective view according to an example. The battery module 1 in FIG. 2 may for example be the battery module 1 in FIG. 1. The battery module 1 has a longitudinal extension in a longitudinal direction L, a width extension in a width direction W and a height extension in a height direction H. The directions are perpendicular to each other and may correspond to a Cartesian coordinate system.

The battery module 1 comprises a first and a second longitudinal frame member 51, 52 which extend in the longitudinal direction L. For example, the first and second longitudinal frame members 51, 52 may be made of a material which provides structural rigidity to the battery module 1. The material may be a metal, such as aluminum, a polymer, such as a fiber reinforced polymer, or any other material that provides structural rigidity. As shown, the first and second longitudinal frame members 51, 52 are offset from each other in the width direction W.

The battery module 1 further comprises at least three crossbeam frame members 61, 62, 63, 64 which extend in the width direction W. In the shown example there are four crossbeam frame members 61, 62, 63, 64. The at least three crossbeam frame members 61, 62, 63, 64 may be made of a material which provides structural rigidity to the battery module 1. The material may be a metal, such as aluminum, a polymer, such as a fiber reinforced polymer, or any other material that provides structural rigidity. As shown, the at least three crossbeam frame members 61, 62, 63, 64 are offset from each other in the longitudinal direction L.

The battery module 1 further comprises at least two separate cell stacks 2, 2', wherein each cell stack 2, 2' comprises a set of cylindrical battery cells 3 and a holder 4, 4' in which the set of cylindrical battery cells 3 are received. Each cylindrical battery cell 3 has a longitudinal extension along the height direction H. In the shown example, there are three separate cell stacks 2, 2'. More particularly, as shown, there may be at least two identical separate cell stacks 2, and/or there may be at least two different separate cell stacks 2, 2', such as with different lengths in the longitudinal direction L and/or comprising different numbers of battery cells 3. Each cylindrical battery cell 3 has a top portion which faces upwardly and a bottom portion which faces downwardly, as seen in the height direction H. The top portion may comprise electric terminals (not shown).

The first and second longitudinal frame members 51, 52 and the at least three crossbeam frame members 61, 62, 63, 64 are connected such that they form at least two receiving spaces S1, S2, S3. In the shown example, there are three receiving spaces S1, S2, S3. The receiving spaces S1, S2 S3 are as shown provided one after the other in the longitudinal direction L.

Each receiving space S1, S2, S3 comprises a respective one of the at least two separate cell stacks 2, 2'.

In addition, each cell stack 2, 2' is a separate unit which is arranged to be insertable and removable from the receiving space S1, S2, S3. In the example shown in FIG. 2, each cell stack 2, 2' is insertable and removable from above. The battery module 1 may further comprise a top cover (not shown) provided above the cell stacks 2, 2'. Accordingly, the top cover should be removed before inserting or removing a cell stack 2, 2'.

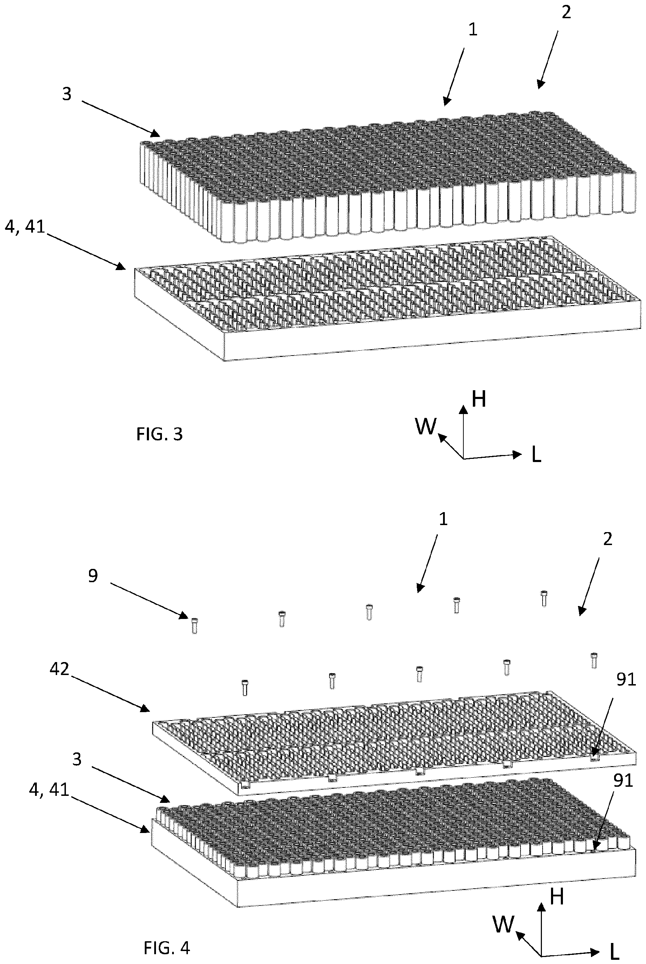

**FIG. 3** and **FIG. 4** show respective exemplary portions of a battery module 1 in an exploded view according to an example. More particularly, FIG. 3 and FIG 4 show a battery stack 2 according to an example disclosed herein, comprising cylindrical battery cells 3. For example, the battery stack 2 in FIG. 3 and FIG. 4 may be the battery stack 2 as shown in FIG. 2.

With reference to e.g. FIG. 2, FIG. 3 and FIG. 4, the holder 4, 4' of each cell stack 2, 2' may comprise a bottom holder portion 41 and a top holder portion 42, as seen in the height direction H, which at least partly enclose the set of cylindrical battery cells 3. For example, as depicted in FIG. 3 and FIG. 4, the bottom holder portion 41 and the top holder portion 42 may be connected by one or more fasteners 9. For example, as shown, the holder 4 may be configured so that the fasteners are inserted from above and extend in the height direction H. Each one of the bottom holder portion 41 and the top holder portion 42 may comprise aligned receiving sections 91, such as holes, for receiving the fasteners 9.

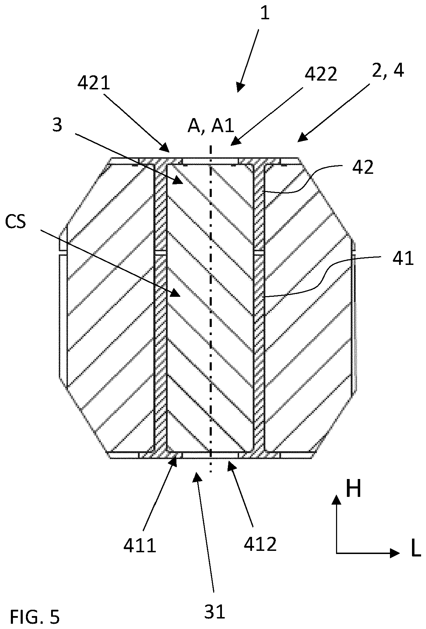

**FIG. 5** is an exemplary battery module 1 in a sectional view according to an example. The section is defined by the height direction H and the longitudinal direction L. For example, the battery module 1 in FIG. 5 may be the battery module 1 as shown in FIGS. 2-4.

As depicted, the holder 4 of at least one of the at least two separate cell stacks 2, and for at least one respective cylindrical battery cell 3 of the set of cylindrical battery cells 3, may comprise a respective cell space CS enclosed by a material portion of the holder 4. The cell space CS may be cylindrically formed with a cell space center axis A1 being substantially aligned with a center axis A of the cylindrical battery cell 3.

As further shown, the holder 4, in the cell space CS, may comprise a bottom support flange 411, as seen in the height direction H, wherein the cylindrical battery cell 3 is supported by the bottom support flange 411.

Additionally or alternatively, as shown, the holder 4, in the cell space CS, may have an opening 412 facing downwardly, as seen in the height direction H. The opening 412 may as shown be coaxial with the center axis A of the cylindrical battery cell 3 and/or with the cell space center axis A1.

As further shown in FIG. 5, the holder 4, in the cell space CS, may comprise a top support flange 421, as seen in the height direction H, wherein the cylindrical battery cell 3 is retained by the top support flange 421.

Additionally or alternatively, as shown, the holder 4, in the cell space CS, may have an opening 422 facing upwardly, as seen in the height direction H. The opening 422 may as shown be coaxial with the center axis A of the cylindrical battery cell 3 and/or with the cell space center axis A1.

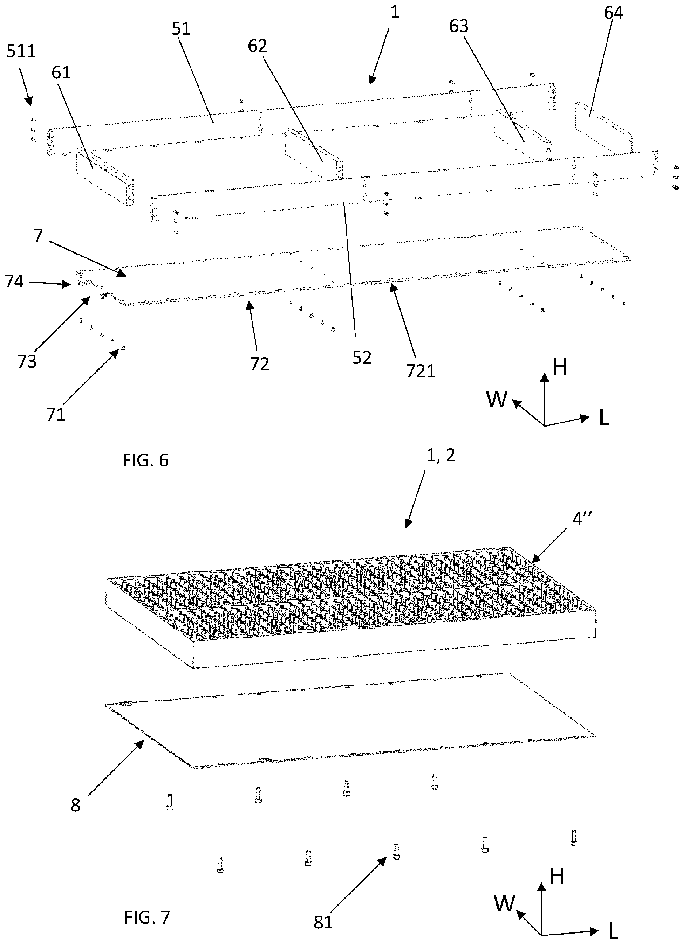

**FIG. 6** is an exemplary portion of a battery module 1 in an exploded view according to an example. For example, the battery module 1 in FIG. 6 may be the battery module 1 as shown in FIGS. 2-5.

As shown, the battery module 1 may further comprise a cooling plate member 7 provided below the at least two separate cell stacks 2, 2', as seen in the height direction H, wherein a bottom portion 31 (see FIG. 5) of each cylindrical battery cell 3 is facing the cooling plate member 7.

As further depicted, the cooling plate member 7 may be attached to the at least three crossbeam frame members 61, 62, 63, 64 and/or to the first and second longitudinal frame members 51, 52 by one or more fasteners 71 from below, as seen in the height direction H. The FIG. 6 example further shows that the at least three crossbeam frame members 61, 62, 63, 64 and/or the first and second longitudinal frame members 51, 52 may be connected to each other by use of additional fasteners 511 from a side of the battery module 1. In the shown example, the additional fasteners 511 extend along the width direction W. The fasteners as disclosed herein may be any type of fastener, such as a screw, a rivet and a bolt. As a complement, or an alternative, an adhesive may be used for connecting the members, and/or welding may be used.

As further shown, the cooling plate member 7, on a longitudinal edge 72 thereof and/or on a transverse edge 73 thereof, may comprise one or more indentations 721 adapted to provide a space for a fastener 521 (not shown in FIG. 6).

The cooling plate member 7 may comprise a coolant circuit (not shown) configured to contain a coolant fluid. Hence, the cooling plate member 7 may as shown comprise a fluid inlet and outlet 74 for coolant fluid. The fluid inlet and outlet 74 may as shown be located at an end portion of the battery module 1, as seen in the longitudinal direction L, i.e., at the transverse edge 73 thereof.

**FIG. 7** is an exemplary portion of a battery module in an exploded view according to an example. More particularly, FIG. 7 depicts an alternative configuration of a cell stack 2 and a holder 4". The cell stack 2 in FIG. 7 may be used in the battery module 1 as e.g. shown in FIG. 2. The battery module 1 may as shown further comprise an auxiliary plate member 8 for at least one of the at least two cell stacks 2. The auxiliary plate member 8 is provided between the holder 4" and the cooling plate member 7. The auxiliary plate member 8 may be made of a material which provides structural rigidity to the battery module 1. The material may be a metal, such as aluminum, a polymer, such as a fiber reinforced polymer, or any other material that provides structural rigidity. The auxiliary plate member 8 may be attached to the holder 4" by one or more fasteners 81 from below, as seen in the height direction H. The set of cylindrical battery cells 3 may be resting on the auxiliary plate member 8, i.e., when provided in the holder 4. Accordingly, in this example, there may be no need of any bottom support flange as mentioned in the above since the set of cylindrical battery cells 3 may be resting on the auxiliary plate member 8 instead.

The battery module 1 as disclosed herein may further comprise a thermal interface material (TIM) provided between the cooling plate member 7 and the set of cylindrical battery cells 3, such as between the cooling plate member 7 and the auxiliary plate member 8 and/or between the auxiliary plate member 8 and the set of cylindrical battery cells 3.

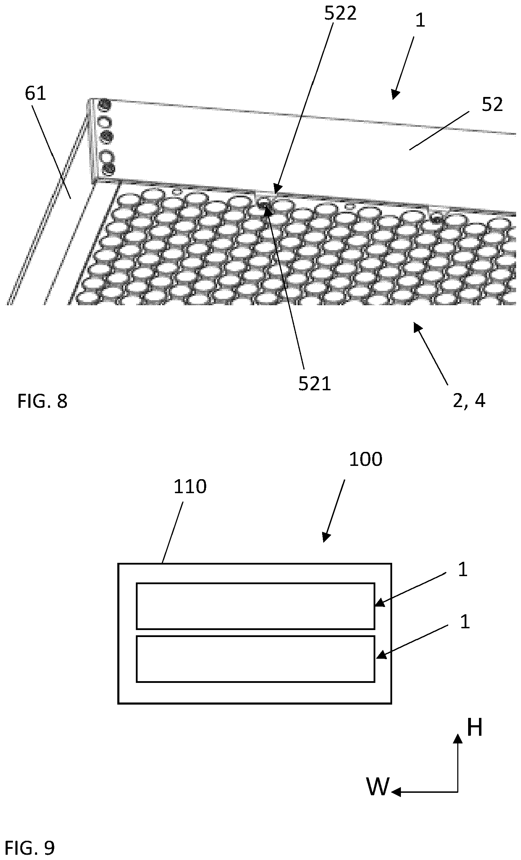

**FIG. 8** is an exemplary battery module 1 in a perspective view according to an example. More specifically, FIG. 8 shows a perspective view slightly from below of a corner portion of the battery module 1 shown in FIG. 2.

As shown, the holder 4 of at least one of the at least two separate cell stacks 2, 2' may be attached to at least one of the at least three crossbeam frame members 61, 62, 63, 64 and/or to the first and second longitudinal frame members 51, 52 by one or more fasteners 521 from below, as seen in the height direction H. As further shown, at least one of the at least three crossbeam frame members 61, 62, 63, 64 and/or the first and second longitudinal frame members 51, 52 may comprise one or more flanges 522, at a bottom portion thereof, into which the one or more fasteners 521 are inserted. In the shown example, the second longitudinal frame member 52 comprises the one or more flanges 522. A shown, the one or more flanges 522 extend so that it/they is/are provided below the least one of the at least two separate cell stacks 2, 2'.

The at least three crossbeam frame members 61, 62, 63, 64 may be identical. Additionally, or alternatively, the first and second longitudinal frame members 51, 52 may be identical. By identical may herein mean that the dimensions of the members are identical, and/or that any holes for fasteners are identical and/or placed at the same corresponding positions.

**FIG. 9** is an exemplary battery pack 100 in a schematic side view according to an example. The battery pack 100 comprises at least two battery modules 1 according to any one of the examples disclosed herein. In the shown example, the battery modules 1 are provided on top of each other, as seen in the height direction H. The directions of the battery pack 100 correspond to the directions of the at least one battery module 1, i.e., the battery pack 100 also has a longitudinal direction L, a width direction W and a height direction H which are the same as the corresponding directions of the at least one battery module 1.

As shown, the battery pack 100 may comprise a housing 110 in which the at least two battery modules 1 are provided.

In the below, possible features and feature combinations of the present disclosure are presented as a list of Examples.

Example 1: A battery module (1) for a battery pack (100), the battery module (1) having a longitudinal extension in a longitudinal direction (L), a width extension in a width direction (W) and a height extension in a height direction (H), the battery module (1) comprising:
- a first and a second longitudinal frame member (51, 52) extending in the longitudinal direction (L),
- at least three crossbeam frame members (61, 62, 63, 64) extending in the width direction (W),
- at least two separate cell stacks (2, 2'), wherein each cell stack (2, 2') comprises a set of cylindrical battery cells (3) and a holder (4, 4') in which the set of cylindrical battery cells (3) are received, wherein each cylindrical battery cell (3) has a longitudinal extension along the height direction (H),

wherein the first and second longitudinal frame members (51, 52) and the at least three crossbeam frame members (61, 62, 63, 64) are connected such that they form at least two receiving spaces (S1, S2, S3),
wherein each receiving space (S 1, S2, S3) comprises a respective one of the at least two separate cell stacks,
wherein each cell stack (2, 2') is a separate unit which is arranged to be insertable and removable from the receiving space (S 1, S2, S3).

Example 2: The battery module (1) according to example 1, wherein the holder (4, 4') of each cell stack (2, 2') comprises a bottom holder portion (41) and a top holder portion (42), as seen in the height direction (H), which at least partly enclose the set of cylindrical battery cells (3).

Example 3: The battery module (1) according to any one of the preceding examples, wherein the holder (4) of at least one of the at least two separate cell stacks (2), and for at least one respective cylindrical battery cell (3) of the set of cylindrical battery cells (3), comprises a respective cell space (CS) enclosed by a material portion of the holder (4).

Example 4: The battery module (1) according to example 3, wherein the cell space (CS) is cylindrically formed with a cell space center axis (A1) being substantially aligned with a center axis (A) of the cylindrical battery cell (3).

Example 5: The battery module (1) according to any one of examples 3-4, wherein the holder (4), in the cell space (CS), comprises a bottom support flange (411), as seen in the height direction (H), wherein the cylindrical battery cell (3) is supported by the bottom support flange (411).

Example 6: The battery module (1) according to any one of examples 3-5, wherein the holder (4), in the cell space (CS), has an opening (412) facing downwardly, as seen in the height direction (H).

Example 7: The battery module (1) according to any one of examples 3-6, wherein the holder (4), in the cell space (CS), comprises a top support flange (421), as seen in the height direction (H), wherein the cylindrical battery cell (3) is retained by the top support flange (421).

Example 8: The battery module (1) according to any one of examples 3-7, wherein the holder (4), in the cell space (CS), has an opening (422) facing upwardly, as seen in the height direction (H).

Example 9: The battery module (1) according to any one of the preceding examples, further comprising a cooling plate member (7) provided below the at least two separate cell stacks (2, 2'), as seen in the height direction (H), wherein a bottom portion (31) of each cylindrical battery cell (3) is facing the cooling plate member (7).

Example 10: The battery module (1) according to example 9, wherein the cooling plate member (7) is attached to the at least three crossbeam frame members (61, 62, 63, 64) and/or to the first and second longitudinal frame members (51, 52) by one or more fasteners (71) from below, as seen in the height direction (H).

Example 11: The battery module (1) according to any one of examples 9-10, wherein the cooling plate member (7), on a longitudinal edge (72) thereof and/or on a transverse edge (73) thereof, comprises one or more indentations (721) adapted to provide a space for a fastener (521).

Example 12: The battery module (1) according to any one of examples 9-11, further comprising an auxiliary plate member (8) for at least one of the at least two cell stacks (2, 2'), wherein the auxiliary plate member (8) is provided between the holder (4) and the cooling plate member (7).

Example 13: The battery module (1) according to example 12, wherein the auxiliary plate member (8) is attached to the holder (4) by one or more fasteners (81) from below, as seen in the height direction (H).

Example 14: The battery module (1) according to any one of examples 12-13, wherein the set of cylindrical battery cells (3) are resting on the auxiliary plate member (8).

Example 15: The battery module (1) according to any one of the preceding examples, wherein the holder (4) of at least one of the at least two separate cell stacks (2, 2') is attached to at least one of the at least three crossbeam frame members (61, 62, 63, 64) and/or to the first and second longitudinal frame members (51, 52) by one or more fasteners (521) from below, as seen in the height direction (H).

Example 16: The battery module (1) according to example 15, wherein at least one of the at least three crossbeam frame members (61, 62, 63, 64) and/or the first and second longitudinal frame members (51, 52) comprises one or more flanges (522), at a bottom portion thereof, into which the one or more fasteners (521) are inserted.

Example 17: The battery module (1) according to any one of the preceding examples, wherein the at least three crossbeam frame members (61, 62, 63, 64) are identical.

Example 18: The battery module (1) according to any one of the preceding examples, wherein the first and second longitudinal frame members (51, 52) are identical.

Example 19: A battery pack (100) comprising at least two battery modules (1) according to any one of the preceding examples.

Example 20: A vehicle (200) comprising a battery module (1) according to any one of examples 1-18 and/or a battery pack (100) according to example 19.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery module (1) for a battery pack (100), the battery module (1) having a longitudinal extension in a longitudinal direction (L), a width extension in a width direction (W) and a height extension in a height direction (H), the battery module (1) comprising:
- a first and a second longitudinal frame member (51, 52) extending in the longitudinal direction (L),
- at least three crossbeam frame members (61, 62, 63, 64) extending in the width direction (W),
- at least two separate cell stacks (2, 2'), wherein each cell stack (2, 2') comprises a set of cylindrical battery cells (3) and a holder (4, 4') in which the set of cylindrical battery cells (3) are received, wherein each cylindrical battery cell (3) has a longitudinal extension along the height direction (H),
wherein the first and second longitudinal frame members (51, 52) and the at least three crossbeam frame members (61, 62, 63, 64) are connected such that they form at least two receiving spaces (S1, S2, S3),
wherein each receiving space (S1, S2, S3) comprises a respective one of the at least two separate cell stacks,
wherein each cell stack (2, 2') is a separate unit which is arranged to be insertable and removable from the receiving space (S1, S2, S3).

2. The battery module (1) according to claim 1, wherein the holder (4, 4') of each cell stack (2, 2') comprises a bottom holder portion (41) and a top holder portion (42), as seen in the height direction (H), which at least partly enclose the set of cylindrical battery cells (3).

3. The battery module (1) according to any one of the preceding claims, wherein the holder (4) of at least one of the at least two separate cell stacks (2), and for at least one respective cylindrical battery cell (3) of the set of cylindrical battery cells (3), comprises a respective cell space (CS) enclosed by a material portion of the holder (4).

4. The battery module (1) according to claim 3, wherein the cell space (CS) is cylindrically formed with a cell space center axis (A1) being substantially aligned with a center axis (A) of the cylindrical battery cell (3).

5. The battery module (1) according to any one of claims 3-4, wherein the holder (4), in the cell space (CS), comprises a bottom support flange (411), as seen in the height direction (H), wherein the cylindrical battery cell (3) is supported by the bottom support flange (411).

6. The battery module (1) according to any one of claims 3-5, wherein the holder (4), in the cell space (CS), has an opening (412) facing downwardly, as seen in the height direction (H).

7. The battery module (1) according to any one of claims 3-6, wherein the holder (4), in the cell space (CS), comprises a top support flange (421), as seen in the height direction (H), wherein the cylindrical battery cell (3) is retained by the top support flange (421).

8. The battery module (1) according to any one of claims 3-7, wherein the holder (4), in the cell space (CS), has an opening (422) facing upwardly, as seen in the height direction (H).

9. The battery module (1) according to any one of the preceding claims, further comprising a cooling plate member (7) provided below the at least two separate cell stacks (2, 2'), as seen in the height direction (H), wherein a bottom portion (31) of each cylindrical battery cell (3) is facing the cooling plate member (7).

10. The battery module (1) according to claim 9, wherein the cooling plate member (7) is attached to the at least three crossbeam frame members (61, 62, 63, 64) and/or to the first and second longitudinal frame members (51, 52) by one or more fasteners (71) from below, as seen in the height direction (H).

11. The battery module (1) according to any one of claims 9-10, further comprising an auxiliary plate member (8) for at least one of the at least two cell stacks (2, 2'), wherein the auxiliary plate member (8) is provided between the holder (4) and the cooling plate member (7).

12. The battery module (1) according to any one of the preceding claims, wherein the holder (4) of at least one of the at least two separate cell stacks (2, 2') is attached to at least one of the at least three crossbeam frame members (61, 62, 63, 64) and/or to the first and second longitudinal frame members (51, 52) by one or more fasteners (521) from below, as seen in the height direction (H).

13. The battery module (1) according to claim 12, wherein at least one of the at least three crossbeam frame members (61, 62, 63, 64) and/or the first and second longitudinal frame members (51, 52) comprises one or more flanges (522), at a bottom portion thereof, into which the one or more fasteners (521) are inserted.

14. A battery pack (100) comprising at least two battery modules (1) according to any one of the preceding claims.

15. A vehicle (200) comprising a battery module (1) according to any one of claims 1-13 and/or a battery pack (100) according to claim 14.
